# EUROPEAN PATENT APPLICATION

(11) **EP 3 633 762 A1**
(43) Date of publication of application: **08.04.2020**
(21) Application number: 18809960.0
(22) Date of filing: 29.01.2018
(51) Int. Cl.: H01M 2/10, H01M 2/34, H01M 2/20, H01M 2/26, H01M 2/02

(54) **BATTERY PACK**

(30) Priority: 01.06.2017 KR 20170068658
(71) Applicant: Samsung SDI Co., Ltd., Yongin-si, Gyeonggi-do 17084 (KR)
(72) Inventor: LEE, Ha Neul, Yongin-si Gyeonggi-do 17084 (KR)
(74) Representative: Shearman, James Ward
(86) International application number: PCT/KR2018/001228
(87) International publication number: WO 2018/221828

(57) **Abstract**

An embodiment of the present disclosure provides a battery pack including: a plurality of battery cells; a conductive plate electrically connecting the plurality of battery cells to each other; electrode tabs electrically connected to the plurality of battery cells; and connection tabs electrically connecting the conductive plate to the electrode tabs, the connection tabs being configured such that when an excessive current flows, the connection tabs melt and block the excessive current flowing between the conductive plate and the electrode tabs, wherein each of the connection tabs includes at least one bent portion.

## Description

### TECHNICAL FIELD

Embodiments of the present disclosure relate to a battery pack.

### BACKGROUND ART

In general, battery cells are used as energy sources in mobile devices, electric vehicles, hybrid vehicles, or other electric devices, and such battery cells may be modified according to the types of devices to which the battery cells are applied.

For example, small mobile devices such as cellular phones may be operated for a certain period of time by using the power and capacity of only one battery cell. However, high-capacity battery modules each formed by electrically connecting a plurality of battery cells to increase power and capacity may be used in devices such as electric vehicles or hybrid vehicles which consume large amounts of power, have long operating times, and require high-power driving. That is, the output voltage or current of such a battery module may be adjusted by varying the number of battery cells included in the battery module. Such battery modules may be electrically connected to each other to form a battery pack.

The above-described background art is technical information that the inventor had or learned when or while deriving embodiments of the present disclosure and may not have been publicly known before the filing of the present application.

### DESCRIPTION OF EMBODIMENTS

### TECHNICAL PROBLEM

Embodiments of the present disclosure may provide a battery pack capable of blocking a temporarily excessive current flowing between a plurality of battery cells.

### SOLUTION TO PROBLEM

An embodiment of the present disclosure provides a battery pack including: a plurality of battery cells; a conductive plate electrically connecting the plurality of battery cells to each other; electrode tabs electrically connected to the plurality of battery cells; and connection tabs electrically connecting the conductive plate to the electrode tabs, the connection tabs being configured such that when an excessive current flows, the connection tabs melt and block the excessive current flowing between the conductive plate and the electrode tabs, wherein each of the connection tabs includes at least one bent portion.

### ADVANTAGEOUS EFFECTS OF DISCLOSURE

According to embodiments of the present disclosure, the battery pack is capable of blocking a temporarily excessive current flowing between the plurality of battery cells. However, the scope of the present disclosure is not limited to the effect.

### BRIEF DESCRIPTION OF DRAWINGS

FIG. 1 is an exploded perspective view illustrating a battery pack according to an embodiment of the present disclosure.
FIG. 2 is an assembled perspective view illustrating elements of the battery pack shown in FIG. 1.
FIG. 3 is an enlarged perspective view illustrating a region A in FIG. 2.
FIG. 4 is a partial perspective view illustrating a positive electrode and a negative electrode of battery cells shown in FIG. 1.
FIG. 5 is a top view illustrating the battery pack shown in FIG. 2.
FIG. 6 is a bottom view illustrating the battery pack shown in FIG. 2..
FIG. 7 is a cross-sectional view of the battery pack, which is taken along line I-I in FIG. 2.
FIG. 8 is a cross-sectional view illustrating another example of a connection tab shown in FIG. 7.
FIG. 9 is a cross-sectional view illustrating another example of the connection tab shown in FIG. 7.

### BEST MODE

An embodiment of the present disclosure provides a battery pack including: a plurality of battery cells; a conductive plate electrically connecting the plurality of battery cells to each other; electrode tabs electrically connected to the plurality of battery cells; and connection tabs electrically connecting the conductive plate to the electrode tabs, the connection tabs being configured such that when an excessive current flows, the connection tabs melt and block the excessive current flowing between the conductive plate and the electrode tabs, wherein each of the connection tabs includes at least one bent portion.

In the embodiment, the conductive plate may include openings through which positive electrodes or negative electrodes of the plurality of battery cells are exposed, and the electrode tabs and the connection tabs may be arranged in the openings.

In the embodiment, the conductive plate may be spaced apart from the plurality of battery cells by a given distance.

In the embodiment, each of the battery cells may include: cap plates provided on both end portions of the battery cell and respectively having a positive polarity and a negative polarity; and an insulation housing coupled to the cap plates while surrounding the cap plates to seal an inside of the battery cell, the insulation housing including an insulating material that does not conduct electricity.

In the embodiment, the conductive plate may be in an imaginary plane in which the electrode tabs are positioned, and the conductive plate may be in contact with the insulation housing.

In the embodiments, the electrode tabs may include: positive electrode tabs electrically connected to the cap plates having the positive polarity; and negative electrode tabs electrically connected to the cap plates having the negative polarity.

In the embodiment, the battery pack may further include a case that surrounds lateral surfaces of the plurality of battery cells and the conductive plate and fixes the plurality of battery cells and the conductive plate.

In the embodiment, the case may include: a first sub-case covering portions of the plurality of battery cells; and a second sub-case covering other portions of the plurality of battery cells.

In the embodiment, one of the first sub-case and the second sub-case may include a connection groove extending toward the other of the first sub-case and the second sub-case, and the other of the first sub-case and the second sub-case may include a connection projection inserted in the connection groove for joining the first sub-case and the second sub-case to each other.

Other aspects, characteristics, and advantages will become apparent and more readily appreciated from the accompanying drawings, claims, and detailed description.

### MODE OF DISCLOSURE

The present disclosure may be variously modified, and various embodiments may be provided according to the present disclosure. Hereinafter, some embodiments will be illustrated in the accompanying drawings and described in detail. Effects and features of the present disclosure, and implementation methods thereof will be clarified through the following embodiments described in detail with reference to the accompanying drawings. However, the scope and idea of the present disclosure are not limited to the following embodiments but may be implemented in various forms.

In the following embodiments, it will be understood that although terms such as "first" and "second," are used to describe various elements, these elements should not be limited by these terms. These terms are only used to distinguish one element from another. The terms of a singular form may include plural forms unless referred to the contrary. In addition, terms such as "include" or "comprise" specify features or the presence of stated elements, but do not exclude other features or elements.

In the drawings, the sizes of elements may be exaggerated for clarity. For example, in the drawings, the size or thickness of each element may be arbitrarily shown for illustrative purposes, and thus the present disclosure should not be construed as being limited thereto.

In addition, the order of processes explained in one embodiment may be changed in a modification of the embodiment or another embodiment. For example, two consecutively described processes may be performed substantially at the same time or performed in an order opposite to the described order.

Hereinafter, embodiments of the present disclosure will be described in detail with reference to the accompanying drawings. In the following description given with reference to the accompanying drawings, the same elements or corresponding elements are denoted with the same reference numerals, and overlapping descriptions thereof will be omitted.

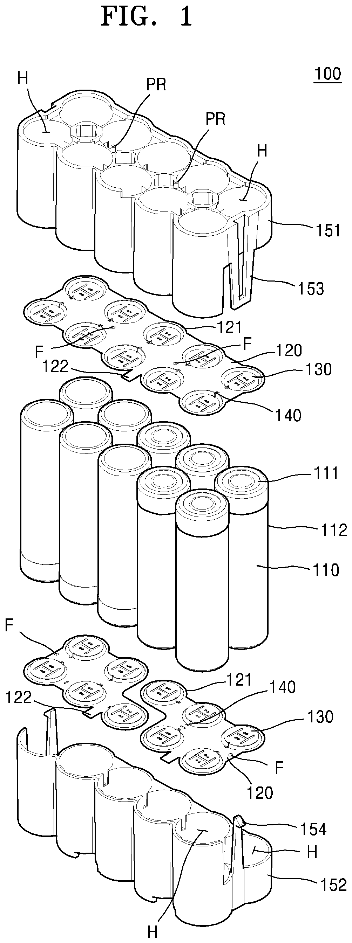

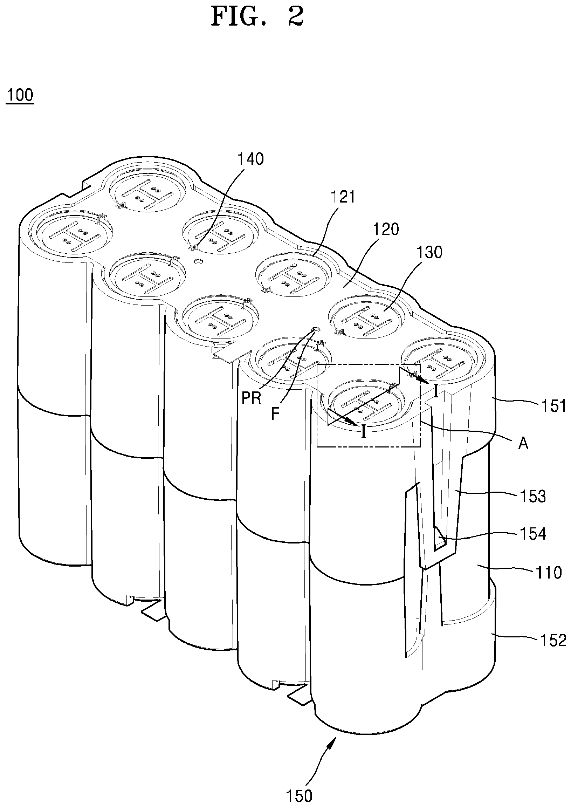

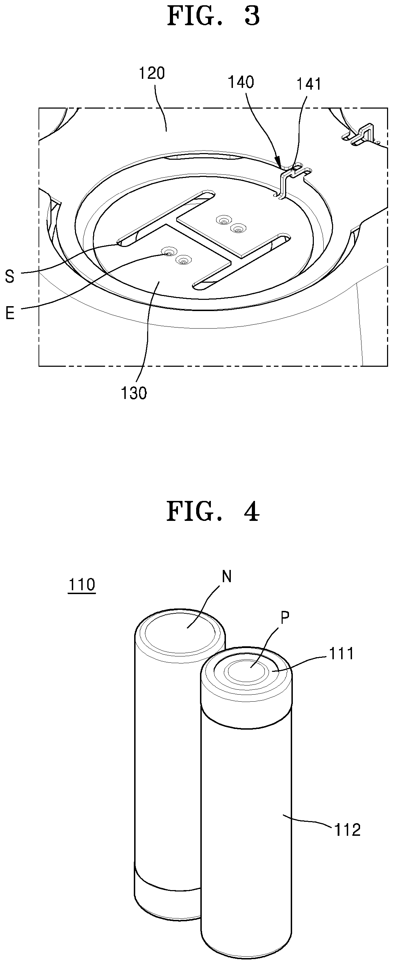

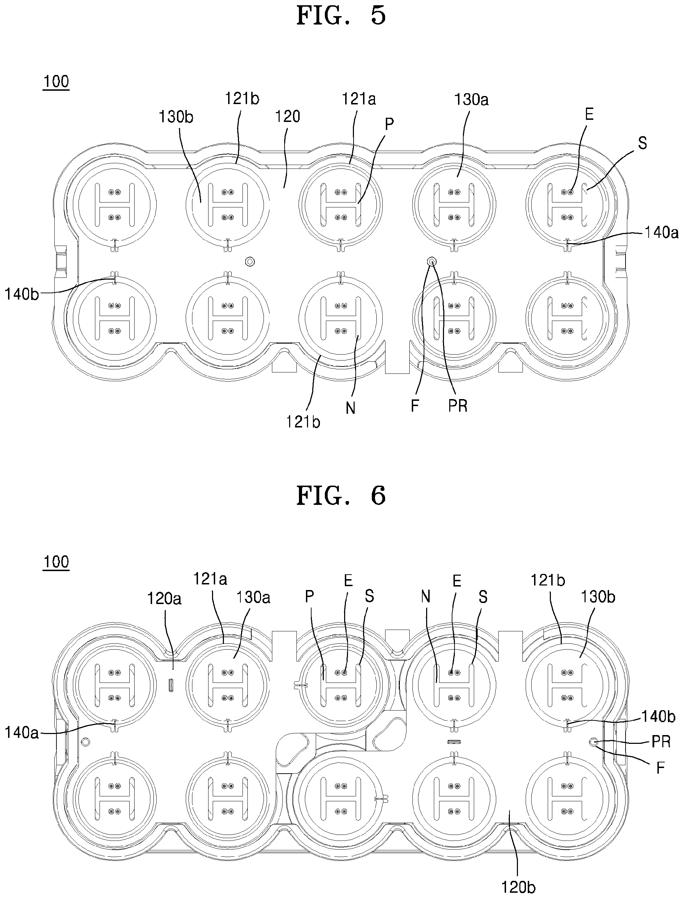

FIG. 1 is an exploded perspective view illustrating a battery pack 100 according to an embodiment of the present disclosure; FIG. 2 is an assembled perspective view illustrating elements of the battery pack 100 shown in FIG. 1; FIG. 3 is an enlarged perspective view illustrating a region A in FIG. 2; FIG. 4 is a partial perspective view illustrating a positive electrode and a negative electrode of battery cells 110 shown in FIG. 1; FIG. 5 is a top view illustrating the battery pack 100 shown in FIG. 2; FIG. 6 is a bottom view illustrating the battery pack 100 shown in FIG. 2.

Referring to FIG. 1, the battery pack 100 according to the embodiment of the present disclosure may include the battery cells 110, conductive plates 120, electrode tabs 130, and connection tabs 140.

Referring to FIGS. 1 and 4, each of the battery cells 110 may include: cap plates 111 that are provided on both end portions thereof and respectively have a positive polarity P and a negative polarity N; and an insulation housing 112 that is coupled to the cap plates 111 and surrounds the cap plates 111, wherein the insulation housing 112 seals the inside of the battery cell 110 and includes an insulating material that does not conduct electricity.

Although not shown in the drawings, each of the battery cells 110 may include an electrode assembly (not shown) in which a positive electrode plate (not shown) and a negative electrode plate (not shown) are arranged on both sides of a separator (not shown), and the electrode assembly may be rolled up, for example, in a cylindrical shape and may be placed in the insulation housing 112.

For example, the positive electrode plate may be aluminum foil coated with a positive electrode active material such as lithium cobalt LiCoO₂, and the negative electrode plate may be copper foil coated with a negative electrode active material such as graphite. Here, the separator may be provided between the negative electrode plate and the positive electrode plate to prevent an electrical short circuit therebetween and allow movement of lithium ions therebetween.

The insulation housing 112 may have a cylindrical shape of which both sides (for example, an upper side and a lower side on which the cap plates 111 are provided) are open. That is, the cap plates 111 respectively having a positive polarity P and a negative polarity N may be coupled to both sides of the insulation housing 112. Here, the cap plates 111 may include a conductive material such as steel, stainless steel, aluminum, or an equivalent thereof, but embodiments of the present disclosure are not limited thereto.

In detail, one of the positive electrode plate and the negative electrode plate of the electrode assembly may be coupled to the cap plate 111 provided on the upper side to impart a positive polarity P to the cap plate 111 provided on the upper side, and the other may be coupled to the cap plate 111 provided on the lower side to impart a negative polarity N to the cap plate 111 provided on the lower side.

As shown in the drawings, cap plates 111 having a positive polarity P and cap plates 111 having a negative polarity N may be arranged on the same side. For example, referring to FIGS. 5 and 6, five cap plates 111 having a positive polarity P and five cap plates 111 having a negative polarity N may be arranged on a side of the battery cells 110. However, this is an example for illustration, and the battery pack 100 may have any other number of battery cells 110 instead of having ten battery cells 110 shown in the drawings.

That is, the number of battery cells 110 shown in the drawings, and the number and ratio of cap plates 111 having different polarities and arranged on a side of the battery pack 100 may be variously determined according to design conditions for the battery pack 100. However, for ease of description, the following description will be given based on the case in which five cap plates 111 having a positive polarity P and five cap plates 111 have a negative polarity N are arranged on a side of the battery cells 110.

Next, the conductive plates 120 may electrically connect the battery cells 110. Referring to FIG. 1, a conductive plate 120 is arranged on an upper side of the battery cells 110, and another conductive plate 120 is arranged on a lower side of the battery cells 110, but embodiments of the present disclosure are not limited thereto.

For example, although not shown in the drawings, a conductive plate 120 may be arranged on one of the upper and lower sides of the battery cells 110. In this case, positive and negative polarities P and N of the battery cells 110 are arranged on the same side. For example, a positive polarity P may be on a center portion of an upper side of a battery cell 110, and a negative polarity N may be on a peripheral portion of the upper side of the battery cell 110.

In detail, when positive and negative polarities P and N of the battery cells 110 are arranged on the same side, the conductive plate 120 may include a first conductive plate (not shown) connected to the positive polarity P of the battery cells 110 and a second conductive plate (not shown) connected to the negative polarity N of the battery cells 110. However, for ease of description, the following description will be given based on the case in which the positive and negative polarities P and N of the battery cells 110 are respectively arranged on both sides of the battery cells 110 with a conductive plate 120 provided on the upper side of the battery cells 110 and a conductive plate 120 provided on the lower side of the battery cells 110. Meanwhile, the conductive plate 120 on the lower side of the battery cells 110 may include conductive plates 120a and 120b separated from each other.

In detail, the conductive plates 120 may include openings 121 through which the positive polarity P or the negative polarity N of the battery cells 110 is exposed, and the electrode tabs 130 (described later) and the connection tabs 140 (described later) may be arranged in the openings 121. The openings 121 may include openings 121a through which the positive polarity P is exposed and openings 121b through which the negative polarity N is exposed.

The electrode tabs 130 may be electrically connected to the battery cells 110. In detail, the electrode tabs 130 may be arranged in the openings 121 of the conductive plates 120 as described above and may be electrically connected to the positive polarity P or the negative polarity N of the battery cells 110. Here, referring to FIGS. 5 and 6, the electrode tabs 130 may include: positive electrode tabs 130a electrically connected to the cap plates 111 of the battery cells 110 having a positive polarity P; and negative electrode tabs 130b electrically connected to the cap plates 111 of the battery cells 110 having a negative polarity N.

The electrode tabs 130 having the above-described structure may be electrically connected to the conductive plates 120 through the connection tabs 140 (described later), and owing to this electrical connection between the electrode tabs 130 and the battery cells 110, the battery cells 110 may be connected in series and/or parallel.

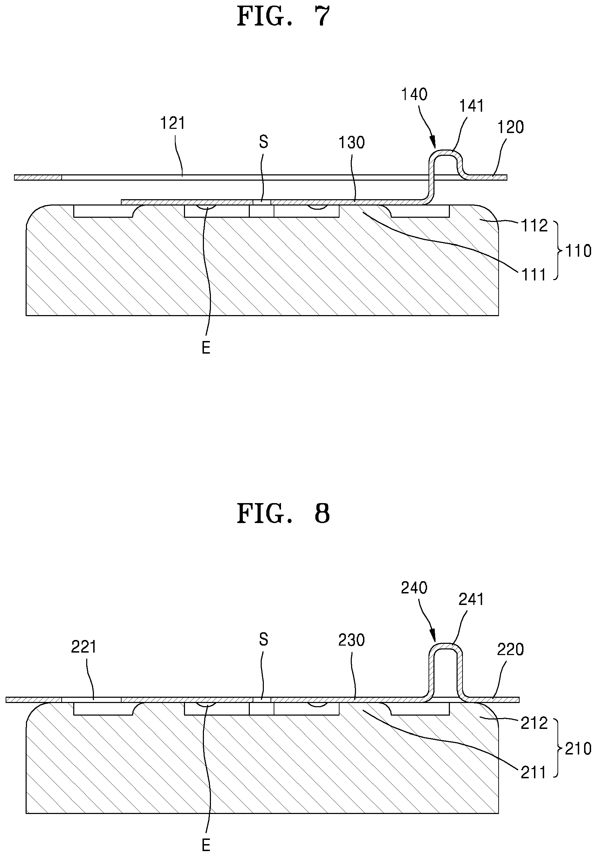

In addition, the electrode tabs 130 may further include embossings E and slits S. The embossings E and the slits S are elements for facilitating the process of joining the electrode tabs 130 to the battery cells 110 and will be described below in detail with reference to FIGS. 7 to 9.

The connection tabs 140 electrically connect the conductive plates 120 to the electrode tabs 130, and when an excessive current flows through the connection tabs 140, the connection tabs 140 may melt such that electrical connection between the conductive plates 120 and the electrode tabs 130 may be broken. For example, the connection tabs 140 may be thin nickel tabs as shown in FIG. 3. Referring to FIGs 5 and 6, the connection tabs 140 may include connection tabs 140a connected to the positive polarity P and connection tabs 140b connected to the negative polarity N. Here, each of the connection tabs 140 may include at least one bent portion 141.

As described above, in a normal state, the connection tabs 140 are elements that electrically connect the conductive plates 120 to the electrode tabs 130 and may function as electrical paths for current flowing from the battery cells 110 to the conductive plates 120 or for current flowing from the conductive plates 120 to the battery cells 110 through the electrode tabs 130.

Furthermore, in case of an event such as a temporarily excessive current equal to or greater than 1,500 A, heat is generated in the bent portions 141, and the bent portions 141 melt and break because of the heat, thereby blocking the current flowing between the conductive plates 120 and the electrode tabs 130.

The reason for this is the structure of the bent portions 141, that is, electrical resistance increases as the length of the connection tabs 140 increases such that when an excessive current flows through the connection tabs 140, the bent portions 141 may melt quickly.

In addition, the battery pack 100 may further include a case 150 that surrounds lateral surfaces of the battery cells 110 and the conductive plates 120 and fixes the battery cells 110 and the conductive plates 120 to each other.

In detail, the case 150 may include a first sub-case 151 covering portions of the battery cells 110 and a second sub-case 152 covering the other portions of the battery cells 110. In addition, the first sub-case 151 and the second sub-case 152 may include protrusions PR configured to be inserted into fixing holes F of the conductive plates 120 for fixing the conductive plates 120 to the first sub-case 151 and the second sub-case 152.

In addition, one of the first sub-case 151 and the second sub-case 152 may include connection grooves 153 extending toward the other of the first sub-case 151 and the second sub-case 152, and the other of the first sub-case 151 and the second sub-case 152 may include connection projections 154 configured to be inserted into the connection grooves 153 to join the first sub-case 151 and the second sub-case 152 to each other.

For example, referring to FIGS. 1 and 2, the connection grooves 153 may be formed in the first sub-case 151 and may extend in a direction toward the second sub-case 152, and the connection projections 154 may be formed on the second sub-case 152 and may extend in a direction toward the first sub-case 151. According to this structure, the first sub-case 151 and the second sub-case 152 may be coupled to each other by inserting the connection projections 154 into the connection grooves 153, and thus the battery cells 110 and the conductive plates 120 may be fixed by the first sub-case 151 and the second sub-case 152. Meanwhile, in the FIG. 1, unexplained reference number H indicates insertion portion of the first sub-case 151 and the second sub-case 152 through which the battery cells 110 are inserted. Also, in the FIG. 1, unexplained reference number 122 indicates power input/output of the conductive plate 120.

Hereinafter, structural characteristics of the battery cells 110, the conductive plates 120, the electrode tabs 130, and the connection tabs 140 will be described in more detail with reference to FIGS. 7 to 9.

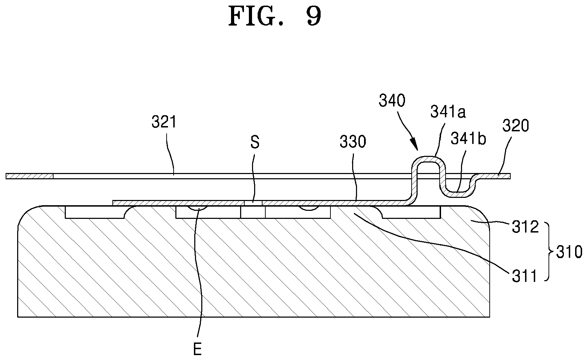

FIG. 7 is a cross-sectional view of the battery pack 100, which is taken along line I-I in FIG. 2, FIG. 8 is a cross-sectional view illustrating another example of the connection tab 140 shown in FIG. 7, and FIG. 9 is a cross-sectional view illustrating another example of the connection tab 140 shown in FIG. 7.

First, referring to FIG. 7, the conductive plate 120 may be spaced apart from each of the battery cells 110 by a given distance. In addition, the electrode tab 130 may be connected to the cap plate 111 of the battery cell 110, and the connection tab 140 may electrically connect the conductive plate 120 and the electrode tab 130 to each other and may include the bent portion 141.

In addition, the embossings E of the electrode tab 130 are a kind of protrusion protruding toward the battery cell 110 and facilitating coupling between the electrode tab 130 and the battery cell 110. Specifically, when the electrode tab 130 is brought into tight contact with the cap plate 111 of the battery cell 110 and is pressed, and at the same time a current is applied through the electrode tab 130 and the cap plate 111, the current concentrates in the embossings E. Accordingly, heat is generated in the embossings E, and thus the embossings E are melted by the heat, thereby joining the cap plate 111 and the electrode tab 130 to each other.

In addition, the slit S of the electrode tab 130 is an element for preventing heat deterioration of the electrode tab 130 that may occur around the embossings E when the battery cell 110 and the electrode tab 130 are joined to each other using the embossings E. Specifically, when a current is applied to join the electrode tab 130 to the battery cell 110, a shun current that does not actually contribute to welding may flow and may cause heat deterioration between the battery cell 110 and the electrode tab 130. The slit S is a structure for minimizing such heat deterioration.

Next, referring to FIG. 8, a conductive plate 220 is located in an imaginary plane in which an electrode tab 230 is positioned, and this means that a portion of the conductive plate 220 is in contact with an insulation housing 212 of a battery cell 210. Even in this structure, a connection tab 240 may include a bent portion 241.

Next, referring to FIG. 9, a conductive plate 320 may be spaced apart from each of a plurality of battery cells 310 by a given distance. In addition, an electrode tab 330 may be connected to a cap plate 311 of the battery cell 310, and a connection tab 340 may electrically connect the conductive plate 320 and the electrode tab 330 to each other and may include a first sub-bent portion 341a and a second sub-bent portion 341b. Meanwhile, in the FIGs 8 and 9, unexplained reference numbers 211 and 311 indicate cap plate and unexplained reference numbers 312 indicates insulation housing. Also, in the FIGs 8 and 9, unexplained reference numbers 221 and 321 indicate opening.

According to the battery pack 100 including the connection tabs 140, 240, or 340 of the embodiments of the present disclosure, when a temporarily excessive current flows between the battery cells 110, the bent portions 141 of the connection tabs 140 are melted, and thus the electrical connection between the conductive plates 120 and the electrode tabs 130 may be broken. In addition, the bent portions 141 may also have a function of lower impact when the battery pack 100 vibrates minutely.

While embodiments of the present disclosure have been described with reference to the accompanying drawings, these embodiments are for illustrative purposes only, and it will be understood by those of ordinary skill in the art that various changes and modifications may be made therefrom. Therefore, the scope and spirit of the present disclosure should be defined by the following claims.

### INDUSTRIAL APPLICABILITY

According to the battery pack of the embodiments of the present disclosure, a temporarily excessive current flowing between the battery cells may be blocked..

## Claims

1. A battery pack comprising:
a plurality of battery cells;
a conductive plate electrically connecting the plurality of battery cells to each other;
electrode tabs electrically connected to the plurality of battery cells; and
connection tabs electrically connecting the conductive plate to the electrode tabs, the connection tabs being configured such that, when an excessive current flows, the connection tabs melt and block the excessive current flowing between the conductive plate and the electrode tabs,
wherein each of the connection tabs comprises at least one bent portion.

2. The battery pack of claim 1, wherein the conductive plate comprises openings through which positive electrodes or negative electrodes of the plurality of battery cells are exposed, and
the electrode tabs and the connection tabs are arranged in the openings.

3. The battery pack of claim 1, wherein the conductive plate is spaced apart from the plurality of battery cells by a given distance.

4. The battery pack of claim 1, wherein each of the battery cells comprises:
cap plates provided on both end portions of the battery cell and respectively having a positive polarity and a negative polarity; and
an insulation housing coupled to the cap plates while surrounding the cap plates to seal an inside of the battery cell, the insulation housing comprising an insulating material that does not conduct electricity.

5. The battery pack of claim 4, wherein the conductive plate is in an imaginary plane in which the electrode tabs are positioned, and the conductive plate is in contact with the insulation housing.

6. The battery pack of claim 4, wherein the electrode tabs comprise:
positive electrode tabs electrically connected to the cap plates having the positive polarity; and
negative electrode tabs electrically connected to the cap plates having the negative polarity.

7. The battery pack of claim 1, further comprising a case that surrounds lateral surfaces of the plurality of battery cells and the conductive plate and fixes the plurality of battery cells and the conductive plate.

8. The battery pack of claim 7, wherein the case comprises:
a first sub-case covering portions of the plurality of battery cells; and
a second sub-case covering other portions of the plurality of battery cells.

9. The battery pack of claim 8, wherein one of the first sub-case and the second sub-case comprises a connection groove extending toward the other of the first sub-case and the second sub-case, and
the other of the first sub-case and the second sub-case comprises a connection projection inserted in the connection groove for joining the first sub-case and the second sub-case to each other.
